# EUROPEAN PATENT SPECIFICATION

(11) **EP 2 030 373 B1**
(45) Date of publication and mention of the grant of the patent: **07.04.2010**
(21) Application number: 07734736.7
(22) Date of filing: 01.06.2007
(51) Int. Cl.: H04L 12/28

(54) **METHOD AND APPARATUS FOR SCALE-FREE TOPOLOGY GENERATION IN RELAY BASED WIRELESS NETWORKS**
VERFAHREN UND VORRICHTUNG ZUR MASSTABSFREIEN TOPOLOGIEERZEUGUNG IN DRAHTLOSEN NETZWERKEN AUF RELAISBASIS
PROCÉDÉ ET APPAREIL POUR LA GÉNÉRATION DE TOPOLOGIE "SCALE-FREE" DANS DES RÉSEAUX SANS FIL DE RELAIS

(30) Priority: 19.06.2006 US 454789
(43) Date of publication of application: 04.03.2009
(73) Proprietor: Nokia Corporation, 02150 Espoo (FI)
(72) Inventor: DIXIT, Sudhir, Weston, MA 02493 (US); YANMAZ, Evsen, Pittsburgh, PA 15213 (US)
(74) Representative: TBK-Patent
(86) International application number: PCT/IB2007/001448
(87) International publication number: WO 2007/148174

(56) References cited:
- US-A1- 2004 002 336
- US-A1- 2004 210 671
- DIXIT S. ET AL.: 'Self-organization of relay-based next generation radio access networks (RANs)' PERSONAL WIRELESS COMMUNICATIONS, ICPWC. IEEE INTERNATIONAL CONFERENCE, [Online] 23 January 2005 - 25 January 2005, pages 197 - 201, XP010798545 Retrieved from the Internet: <URL:http://www.ieeexplore.ieee.org/iel5/97 87/30872/01431331.pdf?isnumber=30872&prod=S TD&arnumber=1431331&arnumber=1431331&arST=+ 197&ared=+201&arAuthor=Dixit%2C+S.%3B+Yanma z%2C+E>
- WANG Z. ET AL.: 'Network maps beyond connectivity' GLOBAL TELECOMMUNICATIONS CONFERENCE, 2005. IEEE, [Online] vol. 1, 28 November 2005 - 02 December 2005, pages 458 - 462, XP010879122 Retrieved from the Internet: <URL:http://www.ieeexplore.ieee.org/iel5/10 511/33285/01577668.pdf?isnumber=33285&prod= STD&arnumber=1577668&arnumber=1577668&arST= +5+pp.&ared=&arAuthor=Zhiheng+Wang%3B+Cheng +Jing%3B+Jamin%2C+S>
- DIXIT S. ET AL.: 'On the design of self-organized cellular wireless networks' COMMUNICATIONS MAGAZINE, IEEE, [Online] vol. 43, no. 7, July 2005, pages 86 - 93, XP001233794 Retrieved from the Internet: <URL:http://www.ieeexplore.ieee.org/iel5/35 /31523/01470827.pdf?tp=&arnumber=1470827&is number=31523>

## Description

### BACKGROUND OF THE INVENTION

### Field of the Invention

The present invention relates to a wireless-fixed relay network, and more particularly, to a method of placing fixed relays in the hybrid network and updating a connectivity map after placing new fixed relays in the network.

### Description of the Related Art

Traditional cellular networks include base stations or access points that are controlled by a Mobile Switching Center, wherein communications is performed over single hop wireless links between base stations and mobile stations. To provide additional services to mobile subscribers, to extend the range and coverage of the mobile services provided and to enhance network performance and system efficiencies, overlay fixed relay network with no infrastructure may be deployed. Fixed relays, for example Wireless LAN access points, can be used to connect mobile nodes that are not covered by any base stations, to the Internet at a low cost and to relay traffic on-demand. Fixed relays also provide an overlay access technology that may co-exist and inter-operate with cellular access networks. In addition to coverage extension, fixed relays provide robustness and traffic management features to existing networks. For example, when a base station fails or is congested, the traffic destined to the base station may be forwarded to other base stations via fixed relays.

Despite the advantages of overlaying fixed relay networks over traditional cellular networks, the scalability of a hybrid network which combines a cellular network and ad hoc wireless network(s), especially relay-based wireless networks, has not been studied. Most of the previous works on wireless network studied ad hoc wireless networks that include nodes, such as mobile nodes, that are placed randomly in the network and these works tried to achieve scalable routing protocols for such networks. Some-well known ad hoc routing protocols that aim to reduce delays across the network, i.e., the number of hops between the source and destination nodes, include what one knows as hierarchical state routing and zone routing protocols.

Hierarchical state routing protocol includes multi-level clustering and partitioning of mobile nodes, wherein each mobile node knows the state-information within its cluster and the cluster-heads exchange state information through gateways. In the zone routing protocol, a zone that includes nodes within a specified number of hops is defined for each node. Within the zone, a proactive table-driven routing scheme is used, whereas between the zones a reactive routing scheme is used. Both the hierarchical state routing and the zone routing protocols try to achieve a scalable routing protocol for a randomly generated network topology.

In addition, a small-world network model and a scale-free network model have been proposed to achieve a small average path length in complex networks, such as the Internet. Small-world and scale-free network models try to achieve a network where each node can reach every other node in the network with a minimum number of hops, independent of the number of nodes in the network. Basically, in the small-world network model, the average path length is small, i.e., most nodes are a few hops away from each other, and the clustering coefficient is high. The clustering coefficient is defined as the average fraction of pairs of neighbors of a node that are also neighbors of each other calculated over the whole network. To form the small-world network model, a current method interpolated between a regular lattice and a random graph. By randomly re-wiring a few edges, this current method reduced the average distance between nodes, but it had little effect on the clustering coefficient. When forming the small-world model, the number of nodes in the network is kept fixed and the re-wired edges are randomly picked. Thus, the small-world model has shown that by introducing some randomness/shortcuts while forming the links between the nodes, the average path length in the network may be significantly reduced while the clustering coefficient is kept high.

In scale-free networks, on the other hand, the degree distribution of the nodes is in power-law form, i.e., most nodes have very few connections and few nodes called hubs have many connections. The scale-free network model, in one current approach, is formed by starting with a small number of (m₀) nodes, and at each time step, adding a new node with m (<=m₀) edges that will be connected to the nodes already present in the system. When choosing the nodes to which the new node is to connect, it is assumed that the probability that a new node will be connected to a node depends on the connectivity/degree of that node. The degree of a node is defined as the total number of connections/links to the node and the average of the degrees of all nodes in the network is known as the average degree. Thus, the larger the degree, the "more important" the node is in the network.

A recent approach applies the small-world model to ad hoc wireless networks by randomly rewiring some links, using physical wires. It has been shown that randomly rewiring some links with physical wires provides for different node distribution in the network, thus small-world model effects can be obtained in ad hoc wireless networks. Information is used to find contacts/shortcuts in the network to be used for resource discovery and savings in terms of the amount of overhead. In this approach, the selection of contacts in the network is not performed randomly. There are some similarities between this approach and the zone routing protocol, wherein every node in this approach has its own view of the network, also called a zone, and the size of the zone is limited by a given number of hops. To communicate with out-of-zone nodes, a node will need contacts, where contacts are located *r* hops away and *r* is a design parameter. In this approach, protocols for contact selection and location are introduced. However, it should be noted that rewiring links using physical wires is an unrealistic solution in wireless networks.

There are no current solutions for achieving scalable routing protocols for such hybrid cellular-fixed relay networks. When fixed relays are being overlaid in a hybrid network, the problem on where to place fixed relays in order to achieve scalability in the "next generation", multi-hop, relay-based wireless networks while, on average, simultaneously minimizing the number of hops or latency must be solved. Specifically, the placement of fixed relays must be performed such that any new relays are within a range of at least one previously deployed relay or base station.

"Self-Organization of Relay-based Next Generation Radio Access Networks (RANs)", Dixit S. et al, pages 197 to 201 in Personal Wireless Communications, IEEE International Conference, January 23 2005, discloses a method (and a related apparatus) according to the preamble of claim 1 (or claim 8), comprising creating a network topology such that the average path length is kept to a minimum number of hops at the time of placement of a new node, wherein a limit is placed on a number of neighbors at the time of placement of the new node and the new node is connected to at least one node in the network.

There are provided a method according to claim 1, an apparatus according to claim 8 and a computer program means according to claim 15.

Developments are set forth in the respective dependent claims.

The limited number of neighbors, for a new node to be placed, is a parameter that impacts the average path length, resiliency and capital investment.

### BRIEF DESCRIPTION OF THE DRAWINGS

The accompanying drawings, which are included to provide a further understanding of the invention and are incorporated in and constitute a part of this specification, illustrates embodiments of the invention that together with the description serve to explain the principles of the invention, wherein:

Figure 1 illustrates an embodiment of a hybrid cellular and relay-based wireless overlay network for implementing the present invention;

Figures 2a illustrates an embodiment of the invention wherein disjoint clusters are connected through a wired backbone;

Figure 2b illustrates an embodiment of the invention wherein disjoint clusters are connected through a high capacity high power (HCHP) fixed relay station; and

Figure 3 illustrates a combined algorithm that generates fixed relays and base stations locations / topology and a connectivity map incrementally, after the addition of each fixed relay.

### DETAILED DESCRIPTION OF PREFERRED EMBODIMENTS

Reference will now be made to preferred embodiments of the present invention, examples of which are illustrated in the accompanying drawings. The present invention achieves a scalable network by applying a small-world network model and a scale-free network model to a joint cellular and fixed relay network that is envisioned for the next generation of wireless networks. As implemented in the present invention, each fixed relay in the network can reach at least one base station in a geographical coverage area through a minimum number of hops. In an embodiment of the present invention, a node is defined as a fixed relay or base station.

It should be noted that a fixed relay network is a form of a multi-hop ad hoc wireless network that is controlled by service providers, for example through base stations. In the fixed relay network, the traffic of many mobile users are forwarded through the fixed relays, possibly through multiple hops according to a routing protocol, but preferentially directly to the nearest base station, if the base station is operating under a preset loading threshold. Thus, the scalability of the fixed relay network is a major concern to be able to meet quality of service requirements, such as delay and bandwidth for both real time and non-real time traffic. Range limitations associated with fixed relays, due to power and interference concerns, add a new constraint that is not present in wired networks, thus, making it harder to arrive at an optimal topology. From the service provider's point of view, it is desirable to cover a geographical area with as few relays as possible, thereby keeping the overlap areas to a minimum. However, by doing so, the number of neighbors of each fixed relay is decreased and hence the average path length, i.e., the average number of hops, in the network is increased, making it more difficult to fulfil the quality of service requirements.

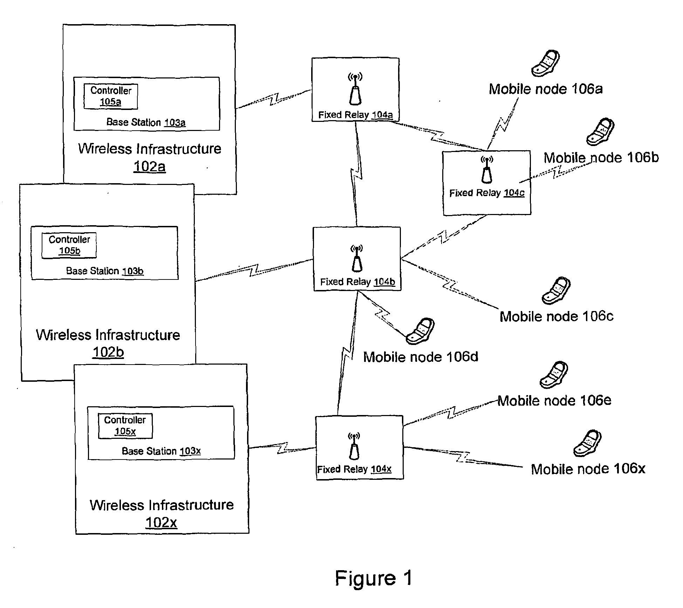

Figure 1 illustrates an embodiment of a hybrid cellular and relay-based wireless overlay network for implementing the present invention. The network of figure 1 includes multiple network infrastructure 102a-102x, multiple fixed relays 104a-104x multiple mobile nodes 106a-106x. The present invention extends the coverage of base stations 103a-103x of network infrastructure 102a-102x via fixed relays 104a-104x that are strategically located in a geographical area by a controlling node, for example controller 105 in base station 103. In an embodiment of the invention, a number of base stations 103 are placed such that the coverage area of base stations 103 slightly overlaps. New fixed relays 104 are placed to cover the geographical area with the fewest number of fixed relays 104 and also to have a small average path length so that fixed relays 104 can reach at least one base station with a small number of hops. Each fixed relays 104 basically receive signals from various mobile users 106 and other fixed relays 104, within their range, and transmit the received data to the next fixed relay 104 or base station 103 in a route. In an embodiment of the invention, fixed relays 104 do not have any infrastructure, i.e., they communicate through air interfaces and the range of fixed relays 104 is limited due to the concerns of, for example, power and interference. As is apparent to one skilled in the art, a geographical area has a number of base stations 103, thus one fixed relay 104 is placed at a time at strategic locations, thereby growing the network continuously.

Instead of finding a routing protocol for a randomly generated network of mobile nodes, the present invention creates a wireless network connectivity topology using the scale-free network criteria such that the average path length is small. The present invention also provides a method for locating fixed relays 104 in the network. Because the small-world and scale-free network models are not readily applicable to wireless networks, due to range limitations associated with fixed relays 104, to place fixed relays 104, an embodiment of the present invention implements a decision metric. Specifically, instead of placing a newly added fixed relay near highly connected fixed relays 104 in the network or connecting some of fixed relays 104 with wires, as currently proposed, the present invention puts a limit on the number of neighbors at the time of placement of each fixed relay 104. This limit on the number of neighbors at the time of placement of each fixed relay 104 is a design parameter that determines the extent of coverage that can be achieved by a given number of fixed relays and the average path length that is achievable between fixed relays 104 and base stations 103.

Once fixed relays 104 are placed in a geographical area, an embodiment of the present invention generates a multi-hop connectivity map at the radio/MAC layer and routes the traffic between fixed relays 104. The routing criteria can be, for example, to minimize the number of hops, the number of congested links, to minimize delays and to maximize network throughput. Thus, in this respect, the location, selection and number of fixed relays 104 are important design parameters. In an embodiment of the present invention, the routing scheme achieves high system utilization by efficient use of network resources, such as bandwidth.

Specifically, in an embodiment of the invention, a load balancing based routing scheme is used to pick a route with the fewest number of hops to the least loaded base station, for example 103b. Since the least loaded base station 103b may not be the one that can be reached by the minimum number of hops, a joint performance metric is used to determine an optimum path. Furthermore, when load balancing is performed, the type of traffic, both real-time traffic and non real-time traffic, is taken into account. While the different types of traffic can be put in separate queues when the network is started, the packets that are re-routed to the less loaded base station 103b are chosen such that the delay experienced by these packets fall in line with the quality of service requirements. Thus, the real-time packets may be routed to use the shortest path to achieve a smaller delay, whereas the non real-time packets can be re-routed through, possibly longer, alternative routes to achieve load balancing.

When a new node/fixed relay 104 is added to the connectivity map, it can be connected preferentially to existing nodes with large number of wireless connections while retaining a previously generated connectivity map. Because each fixed relay 104 in the present invention can reach at least one base station 103 with a minimum number of hops, some fixed relays 104 may possibly not reach each other. When fixed relays 104 are clustered around base stations, this may result in disjoint clusters and could lead to poor load balancing performance. To overcome the disjoint clusters problem, the present invention uses high capacity, high power (HCHP) relay stations in between the disjoint clusters, so that the excess traffic of the congested base station, for example base station 103x, can be forwarded to other non-congested base stations, for example base station 103b, in the network.

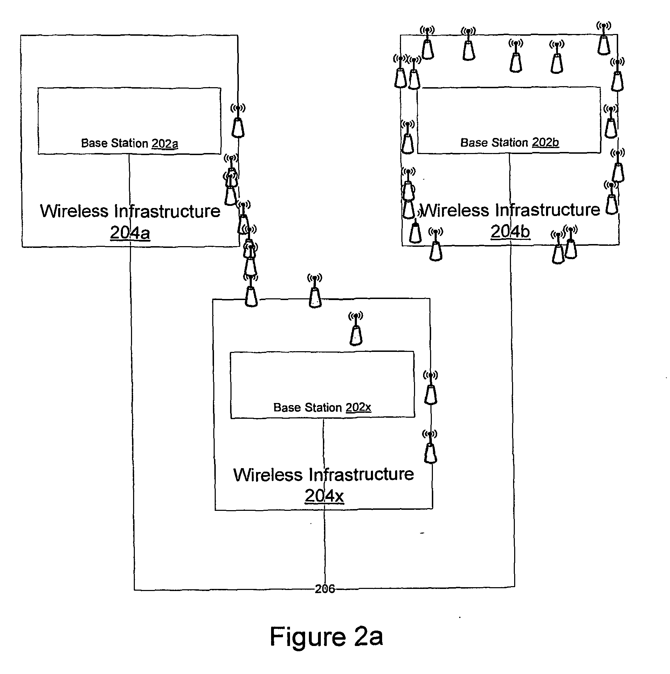

Figures 2a illustrates an embodiment of the invention wherein disjoint infrastructures (clusters) are connected through a wired backbone. In figure 2a, base stations 202 of wireless infrastructure 204 are connected by wired backbone 206. Figure 2a also shows that disjoint clusters 208 are connected through wired backbone 206.

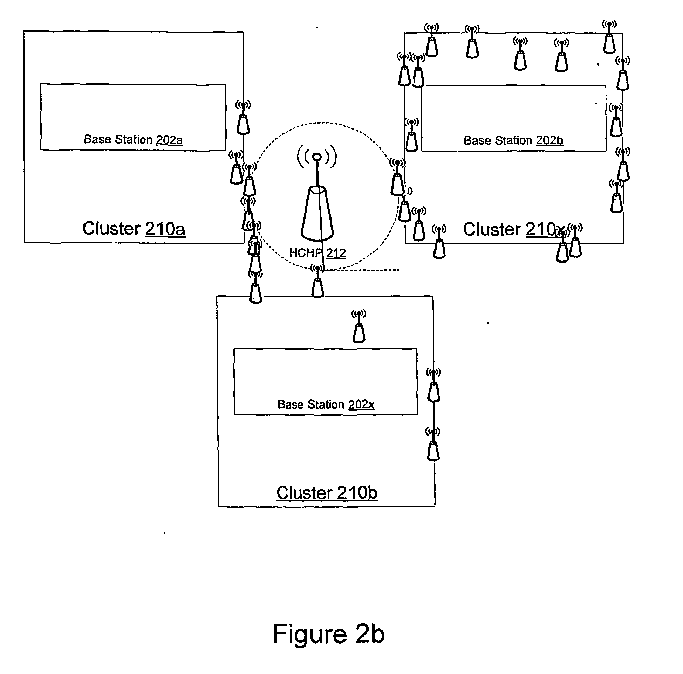

Figure 2b illustrates an embodiment of the invention wherein disjoint clusters are connected through a HCHP fixed relay. In figure 2b, disjoint clusters 210 are connected through HCHP fixed relay 212. The location and the number of the HCHP fixed relays 212 can be determined according to a predetermined algorithm. For example, because the locations of the regular fixed relays 104 are known, the present invention may find the center of gravity of disjoint clusters 210, as illustrated in Figure 2b. Once the center of clusters 210 are found, a HCHP fixed relay 212 may be placed in the center of the line connecting the clusters' centers. If the coverage of HCHP fixed relay 212 is not sufficient to connect disjoint clusters 210, additional fixed relay(s) 104 can be placed along the line connecting the cluster centers. More efficient algorithms that minimize the number of additional HCHP fixed relays 212 also may be used to obtain the benefits of the present invention.

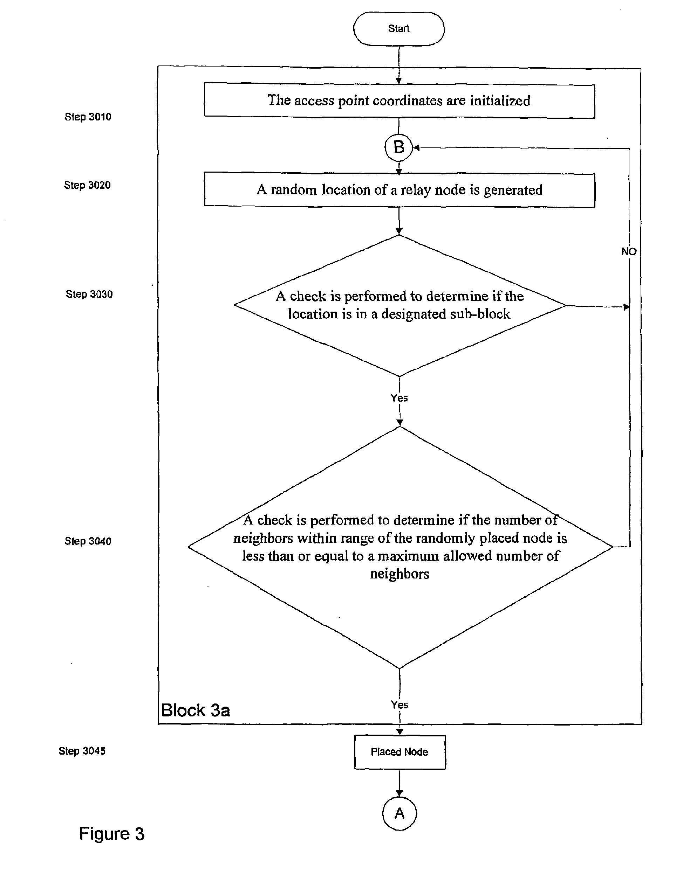

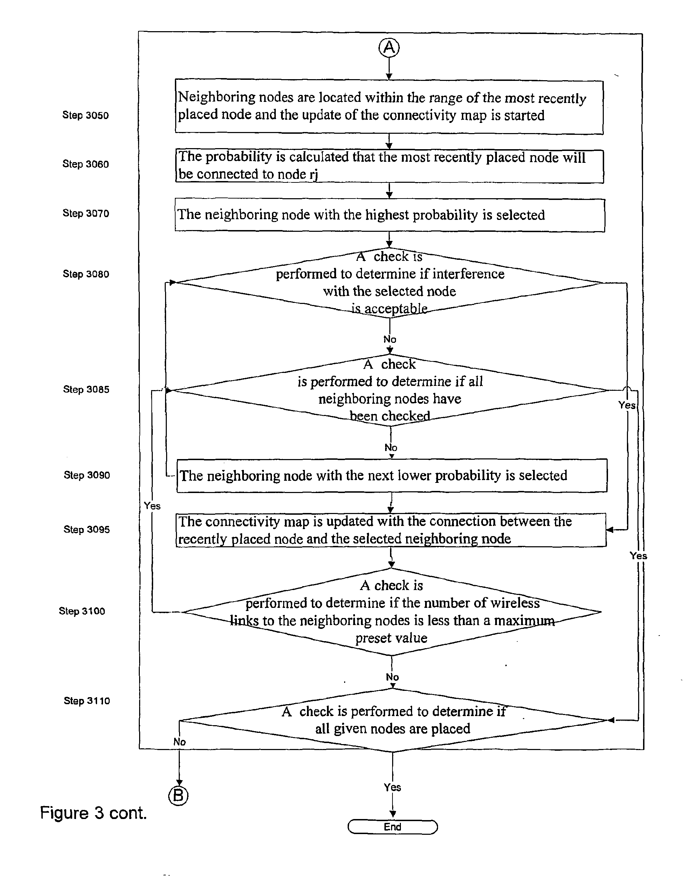

Figure 3 illustrates a combined algorithm that generates the fixed relays and base stations locations / topology and a connectivity map incrementally, after the addition of each fixed relay 104. The first portion of figure 3, block 3a, illustrates a flow diagram for generating a topology of base stations and fixed relays. In step 3010, the access point coordinates are initialized. In Step 3020, a random location of a relay node is generated. In Step 3030, a check is performed to determine if the location is in a designated sub-block. If the check of step 3030 is negative, the algorithm returns to step 3020. If the check is positive, in Step 3040, another check is performed to determine if the number of neighbors within range of the randomly placed node 104 is less than or equal to a maximum allowed number of neighbors. If the check of step 3040 is negative, the algorithm returns to step 3020. If the check of step 3040 is positive, the algorithm goes to block 3b for generating a connectivity update map after a new fixed relay has been placed, as illustrated in step 3045.

In Step 3050 of block 3b, neighboring nodes, i.e., fixed relays and base stations, are located within the range of the most recently placed node 104, call it r0, and the update of the connectivity map is started. During this update process, connections to neighboring nodes are established from the recently placed node (r0) based on connection probability and the interference levels to its neighboring nodes. A limit is placed on the maximum number of connections the most recently placed fixed relay r0 can have to its neighboring nodes.

In Step 3060, a call is placed to neighboring nodes r1, r2 ...rI and the probability (pi) is calculated that node r0 will be connected to node rj (j=1..I). Because the degree of node rj is known as kj, pi=kj/Σkj(for all j). In Step 3070, the neighboring node with the highest probability is selected. In Step 3080, a check is performed to determine if interference with the selected node is acceptable. If the determination of step 3080 is unsuccessful, it is determined in step 3085 if all possible connections to the neighboring nodes have been checked. If this is the case, the algorithm jumps to step 3110 in order to check if all given nodes are placed (step 3110 is described later in more detail). If the result of Step 3085 is that not all possible connections to neighboring nodes were checked yet, the algorithm continues with Step 3090 where the neighboring node with the next lower probability is selected and the algorithm returns to step 3080. If the determination of step 3080 is successful, the connectivity map is updated in Step 3095 with the connection between the recently placed node and the selected neighboring node, and it is checked in Step 3100, if the number of wireless links to the neighboring nodes is less than a maximum preset value. If the determination of step 3100 is successful, the algorithm returns to step 3085. If the determination of step 3100 is unsuccessful, the algorithm determines, in Step 3110, if all given nodes have been placed. If the determination of step 3110 is successful, the algorithm ends, otherwise the algorithm returns to step 3020 to place the next access node 104.

In previous solutions of achieving a scalable hybrid network, the focus was on achieving a scalable routing protocol for a given randomly generated network. However, real networks are not purely random as they have some structure. In an embodiment of the present invention, fixed relays 104 are not randomly placed in the geographical area; on the contrary, the fixed relays 104 need to reach at least one base station 103 in the network to provide services to the mobile nodes 106 within their coverage area. Therefore, instead of randomly placing fixed relays 104 and then trying to find a scalable routing protocol to connect these fixed relays, as previously proposed, an embodiment of the present invention provides a novel method of placing fixed relays such that the network is scalable, i.e., fixed relays 104 can reach to base stations 103 with a small number of hops, independent of the number of fixed relays in the network. In the present invention, once the topology is fixed and their (mesh) connectivity at the radio/MAC layer optimised, a load-balancing "scale-free" routing protocol may be designed to meet key quality of service requirements, such as delay, bandwidth, and throughput. In addition, although the present invention is illustrated above in a hybrid network of base stations and fixed relays, the present invention may also be applied to pure ad hoc wireless networks and sensor networks.

It should be appreciated by one skilled in art, that the present invention may be utilized in any device that implements the hybrid network described above. The forgoing description has been directed to specific embodiments of this invention. It will be apparent, however, that other variations and modifications may be made to the described embodiments, with the attainment of some or all of their advantages. Therefore, it is the object of the appended claims to cover all such variations and modifications as come within the scope of the invention.

## Claims

1. A method, comprising:
creating (Steps 3010 to 3040) a network topology such that the average path length is kept to a minimum number of hops at the time of placement of a new node, wherein a limit is placed on a number of neighbors at the time of placement of the new node,
wherein the new node is connected to at least one node in the network,
**characterized in that**
after the placing of the new node, the method further comprises updating (Step 3095) a connectivity map to connect the newly placed node to the network, the connectivity map supporting scale-free routing.

2. The method of claim 1, further comprising:
determining a routing criterion according to at least one of a minimum number of hops, avoiding of congested links, minimizing transmission delays, maximizing network throughput and load balancing; and
after the updating of the connectivity map, routing traffic between nodes according to the routing criterion.

3. The method of claim 1, wherein the creating of the network topology further comprises:
initializing coordinates associated with any type of access point;
generating a random location for the new node;
performing a first determining to determine if the location of the new node is in a designated sub-block;
if the first determining is successful, performing a second determining to determine if the number of neighbors within range of the new node is less than or equal to a maximum allowed number of neighbors, wherein a limit is placed on the number of neighbors;
if the second determining is successful, placing the node and continuing with a connectivity map update; and
if one of the first determining and second determining is unsuccessful, returning to the generating without placing the node.

4. The method of claim 1, wherein the updating of the connectivity map further comprises:
calculating probabilities with which the newly placed node will be connected to a plurality of neighboring nodes;
selecting a neighboring node with a highest probability;
performing a first determining to determine if interference with the neighboring node is acceptable;
if the first determining is unsuccessful, performing a second determining to determine if all possible connections to the neighboring nodes have been checked;
if the second determining is successful, performing a fourth determining;
if the second determining shows that not all possible connections to the neighboring nodes have been checked, selecting a neighboring node with the next lower probability from a plurality of neighboring nodes within a predefined reachable range and returning to the first determining;
if the first determining is successful, updating the connectivity map with a connection between the recently placed node and the selected neighboring node and continuing to a third determining;
performing the third determining to determine if a number of wireless links to the neighboring nodes is less than a maximum preset value;
if the third determining is successful, returning to the second determining;
if the third determining is unsuccessful, performing the fourth determining to determine if all given relays have been placed;
if the fourth determining is successful, completing the node placement process; and
if the fourth determining is unsuccessful, continuing with placement of a next new node.

5. The method of claim 1, further comprising:
placing one or more high power relay stations between disjoint clusters of nodes; and
determining locations and numbers of the high power relay stations according to a predetermined algorithm.

6. The method according to any of claims 1 or 5, further comprising locating a center of gravity of disjoint clusters of nodes and placing one or more high power relay stations along in a line that connects the centers of the disjoint clusters.

7. The method of claim 1, further comprising:
determining an extent of coverage that can be achieved by a given number of nodes and the average path length that is achievable between relays and base stations.

8. An apparatus, comprising:
creating means for creating a network topology such that the average path length is kept to a minimum number of hops at the time of placement of a new node, wherein a limit is placed on a number of neighbors at the time of placement of the new node, wherein the new node is connected to at least one node in the network,
**characterized by**
updating means for updating, after the placing of the new node, a connectivity map to connect the newly placed node to the network, the connectivity map supporting scale-free routing.

9. The apparatus of claim 8, further comprising
determining means for determining a routing criterion according to at least one of a minimum number of hops, avoiding of congested links, minimizing transmission delays, maximizing network throughput and load balancing; and
routing means for routing traffic between nodes according to the routing criterion.

10. The apparatus of claim 8, wherein the creating means is arranged to:
initialize coordinates associated with any type of access point in the wireless network;
generate a random location for the new node;
perform a first determining to determine if a location of the new node is in a designated sub-block;
if the first determining is successful, to perform a second determining to determine if the number of neighbors within range of the new node is less than or equal to a maximum allowed number of neighbors, wherein a limit is placed on the number of neighbors;
if the second determining is successful, to place the node and continue with the connectivity map update; and
if one of the first determining and second determining is unsuccessful, to return to generate another random location for the new node without placing the new node.

11. The apparatus of claim 8, wherein the updating means is arranged to update the connectivity map and is further arranged to:
calculate the probability with which a newly placed node will be connected to a plurality of neighboring nodes;
select a neighboring node with a highest probability;
perform a first determining to determine if interference with the neighboring node is acceptable;
if the first determining is unsuccessful, to perform a second determining to determine if all possible connections to the neighboring nodes have been checked;
if the second determining is successful, to perform a fourth determining;
if the second determining shows that not all possible connections to the neighboring nodes have been checked, to select a neighboring node with the next lower probability from a plurality of neighboring nodes within a predefined reachable range and to return to the first determining;
if the first determining is successful, to update the connectivity map with a connection between the recently placed node and the selected neighboring node and to continue to a third determining;
to perform the third determining to determine if a number of wireless links to the neighboring nodes is less than a maximum preset value;
if the third determining is successful, to return to the second determining;
if the third determining is unsuccessful, to perform the fourth determining to determine if all given relays have been placed;
if the fourth determining is successful, to complete the node placement process; and
if the fourth determining is unsuccessful, to continue with placement of a next new node.

12. The apparatus of claim 8, further comprising:
placing means for placing one or more high power relay stations in between disjoint clusters of nodes; and
determining means for determining locations and numbers of the high power relay stations according to a predetermined algorithm.

13. The apparatus of any of any of claims 8 or 12, wherein the determining means is arranged to locate a center of gravity of disjoint clusters and to place one or more high power relay stations in a line that connects the centers of the disjoint clusters.

14. The apparatus of claim 8, further comprising:
determining means for determining an extent of coverage that can be achieved by a given number of nodes and the average path length that is achievable between relays and base stations.

15. A computer program means adapted for performing any method of the methods of claims 1 to 7 when the program is run on a processor.

## Patentansprüche

1. Verfahren mit:
Erstellen (Schritte 3010 bis 3040) einer Netzwerktopologie, so dass die mittlere Weglänge zu dem Zeitpunkt der Platzierung eines neuen Knotens auf einer Minimalzahl von Sprüngen gehalten wird, wobei ein Grenzwert bei einer Anzahl von Nachbarn zu dem Zeitpunkt der Platzierung des neuen Knotens gesetzt wird,
wobei der neue Knoten mit zumindest einem Knoten in dem Netzwerk verbunden ist,
**dadurch gekennzeichnet, dass**
nach dem Platzieren des neuen Knotens das Verfahren Aktualisieren (Schritt 3095) einer Konnektivitätskarte umfasst, um den neu platzierten Knoten mit dem Netzwerk zu verbinden, wobei die Konnektivitätskarte skalierfreies Verkehrslenken unterstützt.

2. Verfahren gemäß Anspruch 1, mit:
Bestimmen eines Verkehrslenkkriteriums gemäß zumindest einem einer Minimalzahl von Sprüngen, Vermeiden von verstopften Anbindungen, Minimieren von Übertragungsverzögerungen, Maximieren des Netzwerkdurchsatzes und Lastausgleichen; und,
nach dem Aktualisieren der Konnektivitätskarte, Verkehrslenken von Verkehr zwischen Knoten gemäß dem Verkehrslenkkriterium.

3. Verfahren gemäß Anspruch 1, wobei das Erstellen der Netzwerktopologie umfasst:
Initialisieren von mit irgendeiner Art von Zugriffspunkt assoziierten Koordinaten;
Erzeugen eines zufälligen Orts für den neuen Knoten;
Durchführen eines ersten Bestimmens, um zu bestimmen, ob sich der Ort des neuen Knotens in einem ausgewiesenen Unterblock befindet;
falls das erste Bestimmen erfolgreich ist, Durchführen eines zweiten Bestimmens, um zu bestimmen, ob die Anzahl von Nachbarn innerhalb eines Bereichs des neuen Knotens kleiner oder gleich einer maximal zulässigen Anzahl von Nachbarn ist, wobei ein Grenzwert bei der Anzahl von Nachbarn gesetzt wird;
falls das zweite Bestimmen erfolgreich ist, Platzieren des Knotens und Fortfahren mit einer Aktualisierung der Konnektivitätskarte; und
falls eines des ersten Bestimmens und zweiten Bestimmens nicht erfolgreich ist, Zurückkehren zu dem Erzeugen ohne Platzieren des Knotens.

4. Verfahren gemäß Anspruch 1, wobei das Aktualisieren der Konnektivitätskarte umfasst:
Berechnen von Wahrscheinlichkeiten, mit denen der neu platzierte Knoten mit einer Vielzahl von Nachbarknoten verbunden wird;
Auswählen eines Nachbarknotens mit einer höchsten Wahrscheinlichkeit;
Durchführen eines ersten Bestimmens, um zu bestimmen, ob eine Interferenz mit dem Nachbarknoten akzeptabel ist;
falls das erste Bestimmen nicht erfolgreich ist, Durchführen eines zweiten Bestimmens, um zu bestimmen, ob alle möglichen Verbindungen zu den Nachbarknoten überprüft wurden;
falls das zweite Bestimmen erfolgreich ist, Durchführen eines vierten Bestimmens;
falls das zweite Bestimmen zeigt, dass nicht alle möglichen Verbindungen zu den Nachbarknoten überprüft wurden, Auswählen eines Nachbarknotens mit der nächstniedrigeren Wahrscheinlichkeit aus einer Vielzahl von Nachbarknoten innerhalb eines vordefinierten erreichbaren Bereichs und Zurückkehren zu dem ersten Bestimmen;
falls das erste Bestimmen erfolgreich ist, Aktualisieren der Konnektivitätskarte mit einer Verbindung zwischen dem zuvor platzierten Knoten und dem ausgewählten Nachbarknoten und Fortfahren zu einem dritten Bestimmen;
Durchführen des dritten Bestimmens, um zu bestimmen, ob eine Anzahl von drahtlosen Anbindungen zu den Nachbarknoten kleiner einem maximalen voreingestellten Wert ist;
falls das dritte Bestimmen erfolgreich ist, Zurückkehren zu dem zweiten Bestimmen;
falls das dritte Bestimmen nicht erfolgreich ist, Durchführen des vierten Bestimmens, um zu bestimmen, ob alle gegebenen Relais platziert wurden;
falls das vierte Bestimmen erfolgreich ist, Vollenden des Knotenplatziervorgangs; und
falls das vierte Bestimmen nicht erfolgreich ist, Fortfahren mit der Platzierung eines nächsten neuen Knotens.

5. Verfahren gemäß Anspruch 1, mit:
Platzieren einer oder mehrerer Hochleistungsrelaisstationen zwischen disjunkte Cluster von Knoten; und
Bestimmen von Orten und Anzahlen der Hochleistungsrelaisstationen gemäß einem vorbestimmten Algorithmus.

6. Verfahren gemäß zumindest einem der Ansprüche 1 bis 5, mit Lokalisieren eines Schwerpunktzentrums von disjunkten Clustern von Knoten und Platzieren von einer oder mehreren Hochleistungsrelaisstationen entlang in einer Geraden, die die Zentren der disjunkten Cluster verbindet.

7. Verfahren gemäß Anspruch 1, mit:
Bestimmen eines Grads an Abdeckung, der durch eine gegebene Anzahl von Knoten erreicht werden kann, und der mittleren Weglänge, die zwischen Relais und Basisstationen erreichbar ist.

8. Vorrichtung mit:
einer Erstellungseinrichtung zum Erstellen einer Netzwerktopologie, so dass die mittlere Weglänge zu dem Zeitpunkt der Platzierung eines neuen Knotens auf einer Minimalzahl von Sprüngen gehalten wird, wobei ein Grenzwert bei einer Anzahl von Nachbarn zu dem Zeitpunkt der Platzierung des neuen Knotens gesetzt wird, wobei der neue Knoten mit zumindest einem Knoten in dem Netzwerk verbunden ist,
**gekennzeichnet durch**
eine Aktualisierungseinrichtung zum Aktualisieren, nach dem Platzieren des neuen Knotens, einer Konnektivitätskarte, um den neu platzierten Knoten mit dem Netzwerk zu verbinden, wobei die Konnektivitätskarte skalierfreies Verkehrslenken unterstützt.

9. Vorrichtung gemäß Anspruch 8, mit:
einer Bestimmungseinrichtung zum Bestimmen eines Verkehrslenkkriteriums gemäß zumindest einem einer Minimalzahl von Sprüngen, Vermeiden von verstopften Anbindungen, Minimieren von Übertragungsverzögerungen, Maximieren des Netzwerkdurchsatzes und Lastausgleichen; und
einer Verkehrslenkeinrichtung zum Verkehrslenken von Verkehr zwischen Knoten gemäß dem Verkehrslenkkriterium.

10. Vorrichtung gemäß Anspruch 8, wobei die Erstellungseinrichtung eingerichtet ist, um:
mit irgendeiner Art von Zugriffspunkt in dem drahtlosen Netzwerk assoziierte Koordinaten zu initialisieren;
einen zufälligen Ort für den neuen Knoten zu erzeugen;
ein erstes Bestimmen durchzuführen, um zu bestimmen, ob sich ein Ort des neuen Knotens in einem ausgewiesenen Unterblock befindet;
falls das erste Bestimmen erfolgreich ist, ein zweites Bestimmen durchzuführen, um zu bestimmen, ob die Anzahl von Nachbarn innerhalb eines Bereichs des neuen Knotens kleiner oder gleich einer maximal zulässigen Anzahl von Nachbarn ist, wobei ein Grenzwert bei der Anzahl von Nachbarn gesetzt wird;
falls das zweite Bestimmen erfolgreich ist, den Knoten zu platzieren und um mit einer Aktualisierung der Konnektivitätskarte fortzufahren; und,
falls eines des ersten Bestimmens und zweiten Bestimmens nicht erfolgreich ist, zurückzukehren, um einen anderen zufälligen Ort für den neuen Knoten ohne Platzieren des neuen Knotens zu erzeugen.

11. Vorrichtung gemäß Anspruch 8, wobei die Aktualisierungseinrichtung eingerichtet ist, um die Konnektivitätskarte zu aktualisieren, und eingerichtet ist, um:
die Wahrscheinlichkeit zu berechnen, mit der der neu platzierte Knoten mit einer Vielzahl von Nachbarknoten verbunden wird;
einen Nachbarknoten mit einer höchsten Wahrscheinlichkeit auszuwählen;
ein erstes Bestimmen durchzuführen, um zu bestimmen, ob eine Interferenz mit dem Nachbarknoten akzeptabel ist;
falls das erste Bestimmen nicht erfolgreich, ein zweites Bestimmen durchzuführen, um zu bestimmen, ob alle möglichen Verbindungen zu den Nachbarknoten überprüft wurden;
falls das zweite Bestimmen erfolgreich ist, ein viertes Bestimmen durchzuführen;
falls das zweite Bestimmen zeigt, dass nicht alle möglichen Verbindungen zu den Nachbarknoten überprüft wurden, einen Nachbarknoten mit der nächstniedrigeren Wahrscheinlichkeit aus einer Vielzahl von Nachbarknoten innerhalb eines vordefinierten erreichbaren Bereichs auszuwählen und um zu dem ersten Bestimmen zurückzukehren;
falls das erste Bestimmen erfolgreich ist, die Konnektivitätskarte mit einer Verbindung zwischen dem zuvor platzierten Knoten und dem ausgewählten Nachbarknoten zu aktualisieren und um zu einem dritten Bestimmen fortzufahren;
das dritte Bestimmen durchzuführen, um zu bestimmen, ob eine Anzahl von drahtlosen Anbindungen zu den Nachbarknoten kleiner einem maximalen voreingestellten Wert ist;
falls das dritte Bestimmen erfolgreich ist, zu dem zweiten Bestimmen zurückzukehren;
falls das dritte Bestimmen nicht erfolgreich ist, das vierte Bestimmen durchzuführen, um zu bestimmen, ob alle gegebenen Relais platziert wurden;
falls das vierte Bestimmen erfolgreich ist, den Knotenplatziervorgang zu vollenden; und
falls das vierte Bestimmen nicht erfolgreich ist, mit der Platzierung eines nächsten neuen Knotens fortzufahren.

12. Vorrichtung gemäß Anspruch 8, mit:
einer Platziereinrichtung zum Platzieren einer oder mehrerer Hochleistungsrelaisstationen zwischen disjunkte Cluster von Knoten; und
einer Bestimmungseinrichtung zum Bestimmen von Orten und Anzahlen der Hochleistungsrelaisstationen gemäß einem vorbestimmten Algorithmus.

13. Vorrichtung gemäß zumindest einem der Ansprüche 8 oder 12, wobei die Bestimmungseinrichtung eingerichtet ist, um ein Schwerpunktzentrum von disjunkten Clustern von Knoten zu lokalisieren und um eine oder mehrere Hochleistungsrelaisstationen in einer Geraden zu platzieren, die die Zentren der disjunkten Cluster verbindet.

14. Vorrichtung gemäß Anspruch 8, mit:
einer Bestimmungseinrichtung zum Bestimmen eines Grads an Abdeckung, der durch eine gegebene Anzahl von Knoten erreicht werden kann, und der mittleren Weglänge, die zwischen Relais und Basisstationen erreichbar ist.

15. Computerprogrammeinrichtung, die eingerichtet ist, um irgendein Verfahren der Verfahren gemäß 1 bis 7 durchzuführen, wenn das Programm auf einem Prozessor läuft.

## Revendications

1. Procédé, comprenant l'étape consistant à :
créer (étapes 3010 à 3040) une topologie de réseau de sorte que la longueur moyenne de chemin soit maintenue à un nombre minimum de bonds à l'instant du positionnement d'un nouveau noeud, dans lequel une limite est placée sur un nombre de voisins à l'instant du positionnement du nouveau noeud,
dans lequel le nouveau noeud est connecté à au moins un noeud dans le réseau,
**caractérisé en ce que**
après le positionnement du nouveau noeud, le procédé comprend en outre l'étape consistant à mettre à jour (étape 3095) une carte de connectivité pour connecter le noeud nouvellement positionné au réseau, la carte de connectivité supportant un routage sans échelle caractéristique (ou « scale free »).

2. Procédé selon la revendication 1, comprenant en outre les étapes consistant à :
déterminer un critère de routage selon au moins un élément parmi un nombre minimum de bonds, un contournement des liaisons congestionnées, une minimisation des délais de transmission, une maximisation du débit du réseau et un équilibrage de la charge ; et
après l'étape consistant à mettre à jour la carte de connectivité, router un trafic entre des noeuds selon le critère de routage.

3. Procédé selon la revendication 1, dans lequel l'étape consistant à créer la topologie de réseau comprend en outre les étapes consistant à :
initialiser des coordonnées associées à un type quelconque de point d'accès ;
générer une localisation aléatoire pour le nouveau noeud ;
réaliser une première détermination pour déterminer si la localisation du nouveau noeud est dans un sous-bloc désigné ;
si la première détermination est réussie, réaliser une deuxième détermination pour déterminer si le nombre de voisins au sein de la portée du nouveau noeud est inférieur ou égal à un nombre admissible maximum de voisins, dans lequel une limite est placée sur le nombre de voisins ;
si la deuxième détermination est réussie, positionner le noeud et continuer la mise à jour de'une carte de connectivité; et
si une parmi la première détermination et la deuxième détermination n'est pas réussie, retourner à l'étape consistant à générer sans positionner le noeud.

4. Procédé selon la revendication 1, dans lequel l'étape consistant à mettre à jour la carte de connectivité comprend en outre les étapes consistant à :
calculer des probabilités avec lesquelles le noeud nouvellement positionné sera connecté à une pluralité de noeuds voisins ;
sélectionner un noeud voisin avec une probabilité la plus élevée ;
réaliser une première détermination pour déterminer si une interférence avec le noeud voisin est acceptable ;
si la première détermination n'est pas réussie, réaliser une deuxième détermination pour déterminer si toutes les connexions possibles aux noeuds voisins ont été contrôlées ;
si la deuxième détermination est réussie, réaliser une quatrième détermination ;
si la deuxième détermination montre que toutes les connexions possibles aux noeuds voisins n'ont pas été contrôlées, sélectionner un noeud voisin avec la probabilité inférieure suivante à partir d'une pluralité de noeuds voisins au sein d'une portée joignable prédéfinie et retourner à la première détermination ;
si la première détermination est réussie, mettre à jour la carte de connectivité avec une connexion entre le noeud récemment positionné et le noeud voisin sélectionné et passer à une troisième détermination ;
réaliser la troisième détermination pour déterminer si un nombre de liaisons sans fil aux noeuds voisins est inférieur à une valeur prédéterminée maximum ;
si la troisième détermination est réussie, retourner à la deuxième détermination ;
si la troisième détermination n'est pas réussie, réaliser la quatrième détermination pour déterminer si tous les relais donnés ont été positionnés ;
si la quatrième détermination est réussie, achever le procédé de positionnement de noeud ; et
si la quatrième détermination n'est pas réussie, passer au positionnement d'un nouveau noeud suivant.

5. Procédé selon la revendication 1, comprenant en outre :
positionner une ou plusieurs stations relais à haute puissance entre des grappes disjointes de noeuds; et
déterminer des localisations et des nombres des stations relais à haute puissance selon un algorithme prédéterminé.

6. Procédé selon une quelconque des revendications 1 ou 5, comprenant en outre les étapes consistant à localiser un centre de gravité des grappes disjointes de noeuds et à positionner une ou plusieurs stations relais à haute puissance le long d'une ligne qui connecte les centres des grappes disjointes.

7. Procédé selon la revendication 1, comprenant en outre l'étape consistant à :
déterminer une étendue de couverture qui peut être atteinte par un nombre donné de noeuds et la longueur moyenne de chemin qui peut être atteinte entre des relais et des stations de base.

8. Appareil, comprenant :
des moyens de création pour créer une topologie de réseau de sorte que la longueur moyenne de chemin soit maintenue à un nombre minimum de bonds à l'instant du positionnement d'un nouveau noeud, dans lequel une limite est placée sur un nombre de voisins à l'instant du positionnement du nouveau noeud, dans lequel le nouveau noeud est connecté à au moins un noeud dans le réseau,
**caractérisé par**
des moyens de mise à jour pour mettre à jour, après le positionnement du nouveau noeud, une carte de connectivité pour connecter le noeud nouvellement positionné au réseau, la carte de connectivité supportant un routage sans échelle caractéristique (ou « scale free »).

9. Appareil selon la revendication 8, comprenant en outre
des moyens de détermination pour déterminer un critère de routage selon au moins un élément parmi un nombre minimum de bonds, un contournement des liaisons congestionnées, une minimisation des délais de transmission, une maximisation du débit du réseau et un équilibrage de la charge ; et
des moyens de routage pour router un trafic entre des noeuds selon le critère de routage.

10. Appareil selon la revendication 8, dans lequel les moyens de création sont agencés pour :
initialiser des coordonnées associées à un type quelconque de point d'accès dans le réseau sans fil ;
générer une localisation aléatoire pour le nouveau noeud ;
réaliser une première détermination pour déterminer si une localisation du nouveau noeud est dans un sous-bloc désigné ;
si la première détermination est réussie, réaliser une deuxième détermination pour déterminer si le nombre de voisins au sein de la portée du nouveau noeud est inférieur ou égal à un nombre admissible maximum de voisins, dans lequel une limite est placée sur le nombre de voisins ;
si la deuxième détermination est réussie, positionner le noeud et continuer la mise à jour d'une carte de connectivité ; et
si une parmi la première détermination et la deuxième détermination n'est pas réussie, réaliser un retour pour générer une autre localisation aléatoire pour le nouveau noeud sans positionner le nouveau noeud.

11. Appareil selon la revendication 8, dans lequel les moyens de mise à jour sont agencés pour mettre à jour la carte de connectivité et sont en outre agencés pour :
calculer la probabilité avec laquelle un noeud nouvellement positionné sera connecté à une pluralité de noeuds voisins ;
sélectionner un noeud voisin avec une probabilité la plus élevée ;
réaliser une première détermination pour déterminer si une interférence avec le noeud voisin est acceptable ;
si la première détermination n'est pas réussie, réaliser une deuxième détermination pour déterminer si toutes les connexions possibles aux noeuds voisins ont été contrôlées ;
si la deuxième détermination est réussie, réaliser une quatrième détermination ;
si la deuxième détermination montre que toutes les connexions possibles aux noeuds voisins n'ont pas été contrôlées, sélectionner un noeud voisin avec la probabilité inférieure suivante à partir d'une pluralité de noeuds voisins au sein d'une portée joignable prédéfinie et retourner à la première détermination ;
si la première détermination est réussie, mettre à jour la carte de connectivité avec une connexion entre le noeud récemment positionné et le noeud voisin sélectionné et passer à une troisième détermination ;
réaliser la troisième détermination pour déterminer si un nombre de liaisons sans fil aux noeuds voisins est inférieur à une valeur prédéterminée maximum ;
si la troisième détermination est réussie, retourner à la deuxième détermination ;
si la troisième détermination n'est pas réussie, réaliser la quatrième détermination pour déterminer si tous les relais donnés ont été positionnés ;
si la quatrième détermination est réussie, achever le procédé de positionnement de noeud ; et
si la quatrième détermination n'est pas réussie, passer au positionnement d'un nouveau noeud suivant.

12. Appareil selon la revendication 8, comprenant en outre :
des moyens de positionnement pour positionner une ou plusieurs stations relais à haute puissance entre des grappes disjointes de noeuds; et
des moyens de détermination pour déterminer des localisations et des nombres des stations relais à haute puissance selon un algorithme prédéterminé.

13. Appareil d'une quelconque des revendications 8 ou 12, dans lequel les moyens de détermination sont agencés pour localiser un centre de gravité de grappes disjointes et pour positionner une ou plusieurs stations relais à haute puissance dans une ligne qui connecte les centres des grappes disjointes.

14. Appareil selon la revendication 8, comprenant en outre :
des moyens de détermination pour déterminer une étendue de couverture qui peut être atteinte par un nombre donné de noeuds et la longueur moyenne de chemin qui peut être atteinte entre des relais et des stations de base.

15. Moyens de programme informatique adaptés pour réaliser un quelconque procédé parmi les procédés des revendications 1 à 7, lorsque le programme est exécuté sur un processeur.
